# EUROPÄISCHE PATENTSCHRIFT

(11) **EP 1 011 916 B1**
(45) Veröffentlichungstag und Bekanntmachung des Hinweises auf die Patenterteilung: **09.05.2001**
(21) Anmeldenummer: 96942359.9
(22) Anmeldetag: 05.12.1996
(51) Int. Cl.: B23Q 7/14, B23Q 37/00

(54) **TRANSFERSTRASSE MIT BEARBEITUNGSSTATIONEN**
TRANSFER LINE WITH PROCESSING STATIONS
VOIE DE TRANSFERT DOTEE DE STATIONS D'USINAGE

(30) Priorität: 09.12.1995 DE 19546030; 02.07.1996 DE 19626581
(43) Veröffentlichungstag der Anmeldung: 28.06.2000
(73) Patentinhaber: Hüller Hille GmbH, 71636 Ludwigsburg (DE)
(72) Erfinder: ALBUS, Werner, 72414 Rangendingen (DE); BALLMER, Horst, 71711 Murr (DE); BAYHA, Thomas, 71706 Markgrönigen (DE); CASPER, Jürgen, 71696 Möglingen (DE); CHMIELNICKI, Siegmund, 71691 Freiberg (DE); DENKENA, Berend, 71701 Schwieberdingen (DE); EDLER, Helmut, 74394 Hessigheim (DE); GLOCK, Werner, 71672 Marbach (DE); GÖRZ, Uwe, 71691 Freiberg (DE); GÖTTE, Hans, 71636 Ludwigsburg (DE); HELLER, Peter, 71636 Ludwigsburg (DE); HORN, Wolfgang, 74385 Pleidelsheim (DE); LEIBLE, Willi, 71720 Obersteinfeld (DE); LEUTGEB, Georg, 71720 Obersteinfeld (DE); MARKL, Andrea-Daniela, 71640 Ludwigsburg (DE); ROITH, Rudolf, 71726 Benningen (DE); SCHULZ, Hans-Werner, 74321 Bietigheim (DE); TEURER, Rolf, 71686 Remseck (DE); WELB, Sören, 74360 Ilsfeld (DE); ZIMMERMANN, Helmut, 71711 Steinheim (DE); FRÖHLICH, Dieter, 71737 Kirchberg (DE); LANG, Karl-Heinz, 71642 Ludwigsburg (DE); WALKER, Bernd, 73732 Esslingen (DE)
(74) Vertreter: Dahlkamp, Heinrich-Leopold, Dipl.-Ing.
(86) Internationale Anmeldenummer: EP9605443
(87) Internationale Veröffentlichungsnummer: WO9721518

(56) Entgegenhaltungen:
- EP-A- 0 496 995
- DE-A- 4 324 575
- DE-U- 9 208 735

## Beschreibung

Die Erfindung bezieht sich auf eine Transferstraße für Werkzeugmaschinen zur mechanischen, spanabhebenden Bearbeitung von Werkstücken an Bearbeitungseinheiten mit
- Einrichtungen zum Transport der Werkstücke entlang der Mittenständer,
- seitlich an den Mittenständern angeordneten Seitenständem, auf denen die Bearbeitungseinheiten verfahrbar gelagert sind und
- Versorgungseinrichtungen für die Bearbeitungseinheiten.

Aus dem deutschen Gebrauchsmuster G 92 08 735. 3 U1 ist eine gattungsgemäße Transferstraße bekannt, wobei seitlich der Transferstraße Bearbeitungseinheiten zur Bearbeitung der in der Transferstraße bewegten Werkstücke angeordnet sind und Versorgungsleitungen für die Bearbeitungseinheiten parallel zur Transferstraße an den Seiten unter- und/oder oberhalb der Seiteneinheiten verlegt sind. Bei diesen bekannten Transferstraßen sind für die auf beiden Seiten der Transferstraße angeordneten Bearbeitungseinheiten jeweils außen eigene Versorgungsleitungen und auch eigene Platten vorhanden. Um von außen zwischen den Bearbeitungseinheiten hindurch zum Tisch mit der Transportvorrichtung für die Werkstücke zu gelangen, muß man hierbei unter den und/oder über die in Transportrichtung verlaufenden Versorgungseinheiten hindurchgehen. Die Konstruktion führt entweder zu einer sehr großen Bauhöhe oder zu einem verringerten Durchgang und damit zu einer verschlechterten Zugangsmöglichkeit zu den Bearbeitungseinheiten und der Transferstraße.
Außerdem werden bei der Anordnung der Platten außen an den Seiten lange Fluidleitungen zu den Verbrauchern der Bearbeitungseinheiten insbesondere zu den pneumatischen Werkzeugspannem benötigt.

In der EP 0496 995 B1 ist eine Montagevorrichtung für Teile in einem Palettenförderband beschrieben, wobei seitlich des Förderbandes Montageeinheiten angeordnet sind, die quer zur Palettentransportrichtung an das Förderband heranfahrbar sind und wobei unterhalb des Förderbandes Druckluft- und Luftsaugleitungen sowie das Versorgungskabel zur Zuleitung von Strom zu der Montageeinheit angeordnet sind. Jede Montageeinheit ist dabei im vorgefahrenen Zustand an die Versorgungseinrichtungen ankoppelbar. Die Art der Verbindung ist dabei nicht näher beschrieben.

Der Erfindung liegt die Aufgabe zugrunde, eine gattungsgemäße Transferstraße vorzuschlagen, die eine schnelle und einfache Verbindung der einzelnen Bearbeitungsstationen mit den Versorgungseinrichtungen ermöglicht.

Die Lösung dieser Aufgabe ist im Anspruch 1 angegeben. Die Unteransprüche 2 bis 12 enthalten sinnvolle Ausführungsformen dazu.

Bei der erfindungsgemäßen Transferstraße ist nach Patentanspruch 1 vorgesehen, daß in unmittelbarer Nähe der Trahsportbahn der Werkstücke eine Platte mit einem Steuerblock angebracht ist, der einerseits über Ventilschläuche mit einem Verteilerblock und/oder direkt mit den Fluidleitungen für Hydraulik, Schmierung und Pneumatik und andererseits mit den Verbrauchern der Bearbeitungseinheit verbunden ist und daß der Steuerblock an der Unterseite der Ratte angeordnet ist, die ganz oder teilweise als Abdeckung des die Transportbahn der Werkstücke umschließenden Mittentunnels ausgebildet ist und an der gleichzeitig ein oder mehrere Spannzylinder für die Spannung der Werkstücke befestigt sind.

Hierbei ist die Platte mit dem zugehörigen Steuerblock so angeordnet, daß kurze Verbindungsleitungen zu den Bearbeitungseinheiten ermöglicht werden und auch bei einer sehr kompakten Bauweise ausreichende Zugänglichkeit von außen und Bedienungsfreundlichkeit gegeben ist.

Für jede Bearbeitungseinheit kann in die Fluidleitungenjeweils ein Verteilerblock mit entsprechend absperrbaren Anschlüssen als Baueinheit eingesetzt werden. Dadurch können bereits vormontierte Verteilerblöcke ggf. mit zugehörigen Ventilschläuchen an Ort und Stelle in kürzester Zeit eingesetzt bzw. im Reparaturfall ausgetauscht werden.

Es hat sich als günstig erwiesen, die Platte ganz oder teilweise als Abdeckung des die Transportbahn der Werkstücke umschließenden Mittentunnels auszubilden und den Steuerblock vorzugsweise an der Unterseite der Platte anzubringen und den oder die Spannzylinder für die Werkstücke ebenfalls an der Platte zu befestigen. Die Platte kann ein- oder mehrteilig ausgebildet und als Gesamteinrichtung oder in Einzelteilen vorzugsweise unabhängig von den Versorgungseinrichtungen ausbaubar sein. Sie kann dazu insbesondere auf senkrechten Stützen des Vorrichtungsgrundkörpers montiert sein. Zweckmäßigerweise nimmt die Platte in Transportrichtung der Werkstücke die gesamte Länge einer Takteinheit ein, wobei sie mindestens zwei Stationen, vorzugsweise eine Arbeitsstation und eine Leerstation, in der das Werkstück vermessen und überwacht werden kann, überdeckt. In der Platte können auch Abzugsstutzen und/oder Druckentlastungsklappen zur Ableitung von bei der Bearbeitung z.B. von Magnesiumwerkstücken entstehenden Emissionsgasen angeordnet sein. Zur Entnahme von Werkstücken sollte eine Platte auch mindestens eine vorzugsweise verschließbare Öffnung besitzen.

Nach Anspruch 12 ist vorgesehen, daß
a) die in Transportrichtung der Werkstücke verlaufenden Versorgungseinrichtungen ausschließlich innerhalb oder im Bereich und/oder oberhalb des Mittenständers angeordnet sind,
b) die Versorgungseinrichtungen mit jeder Bearbeitungseinheiten über kurze, lösbare Verbindungsstücke verbunden sind,
c) zumindest in den Fluidleitungen für Hydraulik, Schmierung, Pneumatik etc. Absperreinrichtungen angeordnet sind und
d) zwischen den Absperreinrichtungen und der Bearbeitungseinheit mindestens ein Steuerblock mit Ventilen angeordnet ist.

Zu den in Transportrichtung der Werkstücke verlaufenden Versorgungseinrichtungen gehören zumindest die Stromschienen, der Kabelkanal, die Fluidhauptleitungen für Hydraulik, Schmierung, Pneumatik oder ähnliches und die Kühlmittelleitungen für Hoch- und Niederdruck. Erfindungsgemäß sollen alle diese Versorgungsleitungen nicht wie bisher ober- oder unterhalb der Seiteneinheiten, sondern ausschließlich innerhalb oder im Bereich des Mittenständers angeordnet sein. Das kann erfindungsgemäß bedeuten, daß die Kühlmittel-Leitungen für Hoch- und Niederdruck seitlich am oder auch vollständig im Mittenständer angeordnet sind. Die übrigen Versorgungseinrichtungen werden bevorzugt oberhalb des Mittenständers bzw. oberhalb des die Transportbahn der Werkstücke umschließenden Mittentunnels angeordnet. Bei der besonderen Ausführung gemäß Anspruch 6 werden die Kabelkanäle, Stromschienen und FluidleitungenHydraulik, Schmierung, Pneumatik oder ähnliches seitlich oder oberhalb von Stützen befestigt, die wiederum auf dem Vorrichtungsgrundkörper bzw. dem Mittenständer abgestützt sind. Diese Versorgungseinrichtungen sind dabei soweit von der Mittelebene des Mittentunnels seitlich verschoben, daß der Mittentunnel auch von oben frei zugänglich ist und ggf. nach Entfernung der Abdeckung des Mittentunnels Werkzeuge und Werkstücke von oben zugänglich oder auch ggf. von oben einsetzbar bzw. nach oben ausbaubar sind.

Die Versorgungseinrichtungen sind weiterhin nach Merkmal b) mit jeder Bearbeitungseinheit über kurze, lösbare Verbindungsstücke verbunden. Die Kabelkanäle und die Stromschienen können dazu über quer zur Transportrichtung der Werkstücke verlaufende Stichkanäle mit den außen im Bereich der Enden der Seitenständer angeordneten Schaltschränken verbunden sein. Diese Stichkanäle sind dabei oberhalb und im Bereich der Seitenständer so angeordnet, daß der Zugangsbereich zwischen zwei Seitenständem von der Seite her zum Mittenständer hin völlig frei bleibt. Um dieses zu erreichen, sind auch die Hoch- und/oder Niederdruckleitungen für das Kühlmittel über im Seitenständer integrierte und/oder über ein- oder beidseitig am Seitenständer angebrachte Leitungen mit den Bearbeitungseinheiten verbunden. Die Ventile für die Kühlmittelzufuhr zu den Bearbeitungseinheiten können dabei über den Wasserrinnen an den äußeren Enden der Seiteneinheiten angebracht sein. Insgesamt sind also weder in Transportrichtung der Werkstücke noch quer dazu irgendwelche Versorgungseinrichtungen angeordnet, die den freien Zugang von der Seite her zwischen den Seitenständern mit den Bearbeitungseinheiten hindurch zum Mittenständer behindern könnten. Insgesamt wird durch diese Maßnahmen bereits der Bedienungskomfort und die Servicefreundlichkeit der Transferstraße erheblich verbessert.

Um im Hinblick auf eine möglichst vollkommene Modulbauweise jede Takteinheit möglichst unabhängig von den anderen Takteinheiten außer Betrieb nehmen oder aus- und einbauen zu können, ist gemäß Merkmal c) vorgesehen, zumindest in den Fluidleitungenfür Hydraulik, Schmierung, Pneumatik etc. möglichst aber auch in den Kabelkanälen und Stromschienen Absperreinrichtungen oder Steckerverbindungen anzuordnen.

In Verbindung mit den Absperreinrichtungen in den Fluidleitungenist weiterhin vorgesehen, möglichst in der Nähe der Absperreinrichtungen für die Bedienung einer Bearbeitungseinheit mindestens einen Steuerblock mit Ventilen anzuordnen. Der Steuerblock ist damit nicht mehr wie bisher üblich am äußeren Ende des Seitenständers, sondern im Bereich des Mittenständers angeordnet. Hierdurch wird eine drastische Verkürzung der Leitungslängen zu den Bearbeitungseinheiten verbunden mit einer Reduzierung der Signalzeiten von hydraulischen und pneumatischen Steuersignalen erreicht. Die Hydraulik-, Pneumatik- und Schmierventile sind von einer Seite her gut einsehbar, zugänglich und auch bei laufender Maschine einstellbar.

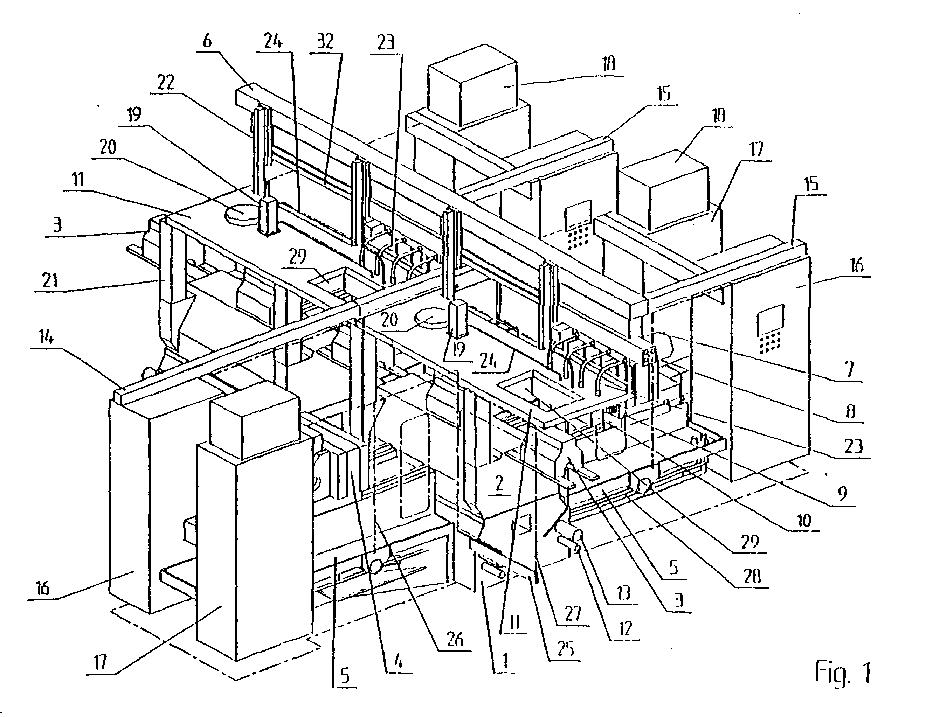

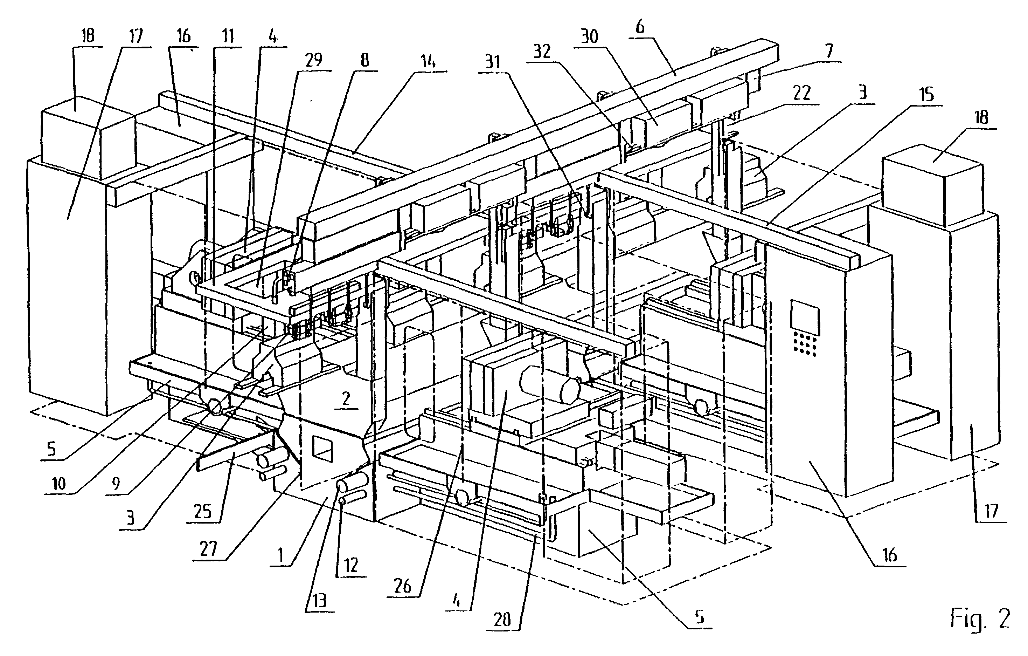

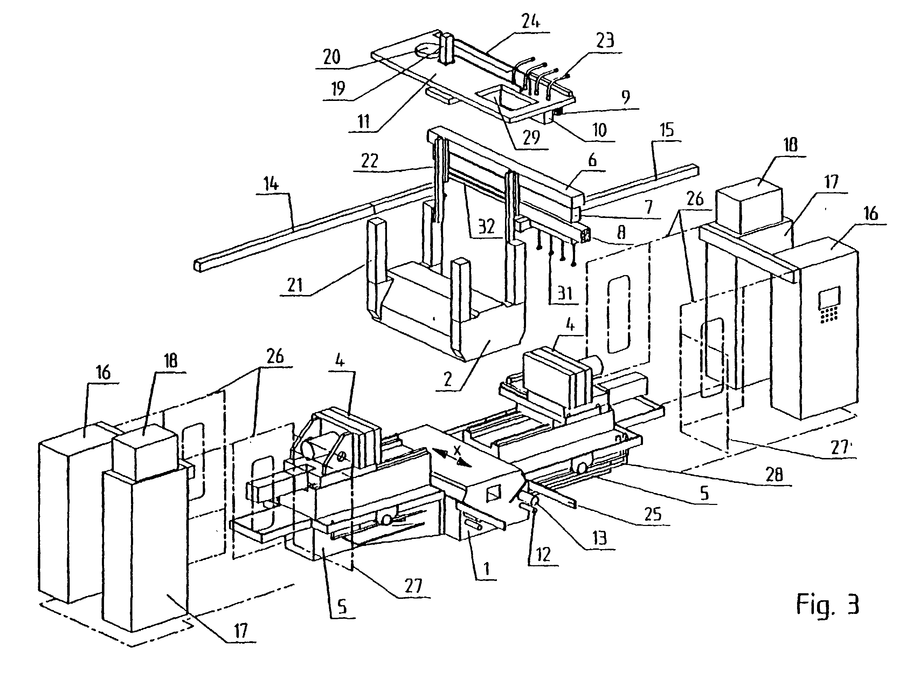

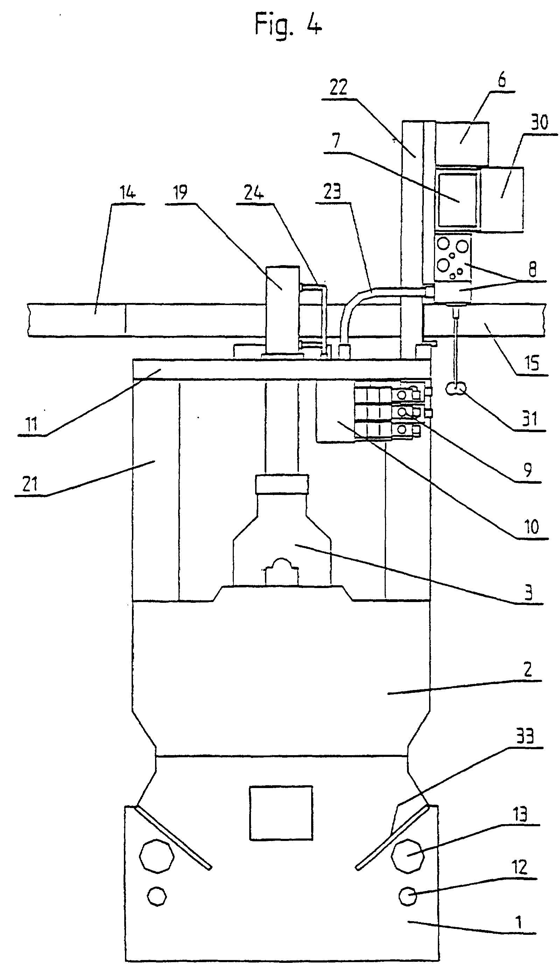

Die Erfindung wird anhand der beigefügten Figuren 1 bis 4 beispielsweise näher erläutert.

Die Figuren 1 und 2 zeigen perspektivische Darstellungen der Transferstraße mit einigen Bearbeitungseinheiten.
Fig. 3 zeigt als Aufriß eine Takteinheit mit beidseitig des Mittenständers 1 auf Seitenständern 5 angeordneten Bearbeitungseinheiten 4.
Fig. 4 zeigt einen senkrechten Schnitt durch den mittleren Teil der Transferstraße.

In den Figuren ist der Mittenständer 1 mit dem darauf befestigten Vorrichtungsgrundkörper 2 dargestellt, auf dem die Werkstücke 3 bewegt werden. Auf den Seitenständern 5 sind die Bearbeitungseinheiten 4 zumindest quer zur Transportrichtung der Werkstücke verfahrbar. Seitlich der Transportbahn der Werkstücke 3 sind auf dem Vorrichtungsgrundkörper 2 senkrechte Stützen 21 angeordnet, auf denen die Platte 11 aufliegt. An einer Längsseite sind die Stützen 11 nach oben um die Stützen 22 verlängert, an denen am oberen Ende an der Außenseite in Transportrichtung der Werkstücke 3 der Kabelkanal 6, die Stromschienen 7, die Fluidleitungen32 für Hydraulik, Schmierung, Pneumatik o.ä. und zwischen den Fluidleitungen32 die Verteilerblöcke 8 befestigt sind. Durch die Anordnung der Versorgungseinrichtungen außen an den Stützen 22 ist die Platte 11 mit den daran befestigten Spannzylindern 19, den Absaugstutzen 20 und den Ventilschläuchen 23 und 24 jederzeit von oben zugänglich und ggf. ausbaubar, ohne daß die Versorgungseinrichtungen demontiert werden müssen. Für einen derartigen Fall können die Absperrhähne 31 an den Fluidleitungen32 der benachbarten Stationen geschlossen werden, so daß der Verteilerblock 8 aus der Fluidleitung 32 herausgenommen werden kann. Die Anschlüsse der Ventilschläuche 23 am Verteilerblock 8 oder dem Steuerblock 10 können gelöst werden, wenn die Ventile im Verteilerblock 8 der betreffenden Station geschlossen werden, um dann die Platte 11 vorzugsweise nach oben hin ausbauen zu können. Die Platte 11 bildet die obere Abdeckung des Mittentunnels, der außerdem unten von dem Vorrichtungsgrundkörper 2 und seitlich von der an den Stützen 21 befestigten Verkleidung 27 gebildet wird. An der Unterseite der Platte 11 ist der Steuerblock 10 mit den automatisch betätigten Ventilen 9 angeordnet. Die Ventilschläuche 23 und 24 sind von oben durch die Platte 11 geführt und mit dem Steuerblock 10 verbunden. Die Verbindungsleitungen innerhalb des Mittentunnels vom Steuerblock 10 zu den einzelnen Verbrauchern der Bearbeitungsstation sind nicht dargestellt. Im Bereich des Überganges von einer Platte zur nächsten sind quer zur Transportrichtung der Werkstücke 3 Stichkanäle 14 und 15 für Elektroleitungen als Verbindung des Kabelkanals 6, der Stromschienen 7 und des Abgangskastens 30 mit den Schaltschränken 16 und 17 angeordnet. Auch diese Stichkanäle 14 und 15 verlaufen derartig ober- oder unterhalb bzw. zwischen den Platten, daß sie den Ausbau der Platten 1 nicht behindern. Die Platten 11 überdeckt in der Regel sowohl eine Arbeitsstation als auch eine Leerstation. Im Bereich der Leerstation enthält die Platte 11 eine verschließbare Öffnung 29, über die das Werkstück und die eventuelle Meß- und Prüfeinrichtung auf einfache Weise von oben zugänglich sind.

Die Kühlmittelleitungen für Hochdruck 12 und Niederdruck 13 sind im Mittenständer 1 unterhalb der Spänerutsche 33 untergebracht und sind über seitlich am Seitenständer 5 befestigte Leitungen 28 mit den einzelnen Bearbeitungseinheiten 4 verbunden. Die Bearbeitungseinheiten 4 auf den Seitenständern 5 sind durch Verkleidungen 26 z.B. aus Schiebetüren eingehaust, wobei allerdings der Bereich zur Transportbahn der Werkstücke offen bleibt. Der Steuerschrank 16 ist mit dem Leistungsschrank 17 über einen nicht näher bezeichneten Stichkanal verbunden. Auf dem Leistungsschrank 17 ist außerdem das Kühlaggregat 18 dargestellt. Zwei Takteinheiten werden über übliche Verbindungsleisten 25 miteinander verbunden.

### Bezugszeichenliste:

- 1: Mittenständer
- 2: Vorrichtungsgrundkörper
- 3: Werkstück
- 4: Bearbeitungseinheit
- 5: Seitenständer
- 6: Kabelkanal
- 7: Stromschienen
- 8: Verteilerblock
- 9: Ventile
- 10: Steuerblock an 11
- 11: Platte
- 12: Hochdruckleitung für Kühlmittel
- 13: Niederdruckleitung für Kühlmittel
- 14,15: Stichkanäle für Elektroleitungen zum Schaltschrank 16
- 16: Schaltschrank, Steuerschrank
- 17: Schaltschrank, Leistungsschrank
- 18: Kühlaggregat
- 19: Spannzylinder
- 20: Absaugstutzen
- 21: Stützen für 11 auf 2
- 22: Stützen für 6, 7, 8 an 11
- 23: Ventilschläuche zwischen 8 und 10
- 24: Ventilschläuche zwischen 19 und 10
- 25: Verbindungsleiste zweier Takteinheiten
- 26: Verkleidung des Seitenteils (Schiebetür, Steckblech)
- 27: Verkleidung des Mittenteils
- 28: Leitungen für Kühlmittel an 5
- 29: Öffnung in 11
- 30: Abgangskasten
- 31: Absperrhahn
- 32: Fluidleitungen für Hydraulik, Schmierung, Pneumatik o.ä.
- 33: Spänerutsche

## Patentansprüche

1. Tranferstraße für Werkzeugmaschinen zur mechanischen, spanabhebenden Bearbeitung von Werkstücken an Bearbeitungseinheiten mit
- Einrichtungen zum Transport der Werkstücke entlang der Mittenständer (1),
- seitlich an den Mittenständem (1) angeordneten Seitenständem (5), auf denen die Bearbeitungseinheiten (4) verfahrbar gelagert sind und
- Versorgungseinrichtungen für die Bearbeitungseinheiten
**dadurch gekennzeichnet**, daß in unmittelbarer Nähe der Transportbahn der Werkstücke eine Platte (11) mit einem Steuerblock (10) angebracht ist, der einerseits über Ventilschläuche (23) mit einem Verteilerblock (8) und/oder direkt mit den Fluidleitungen (32) für Hydraulik, Schmierung und Pneumatik und andererseits mit den Verbrauchern der Bearbeitungseinheit verbunden ist und daß der Steuerblock (10) an der Unterseite der Platte (11) angeordnet ist, die ganz oder teilweise als Abdeckung des die Transportbahn der Werkstücke umschließenden Mittentunnels ausgebildet ist und an der gleichzeitig ein oder mehrere Spannzylinder (19) für die Spannung derWerkstücke befestigt sind.

2. Transferstraße nach Anspruch 1, **dadurch gekennzeichnet,** daß in die Fluidleitungen(32) für jede Bearbeitungsstation als Baueinheit ein Verteilerblock (8) mit entsprechend absperrbaren Anschlüssen einsetzbar ist.

3. Transferstraße nach Anspruch 1 oder 2, **dadurch gekennzeichnet,** daß die Platte (11) auf Stützen (21) des Vorrichtungsgrundkörpers (2) abgestützt, ein- oder mehrteilig ausgebildet und als Gesamteinrichtung oder in Einzelteilen, vorzugsweise unabhängig von den Versorgungseinrichtungen (6, 7, 8, 14, 15) ausbaubar ist.

4. Transferstraße nach Anspruch 1, 2 oder 3, **dadurch gekennzeichnet**, daß die in Transportrichtung der Werkstücke verlaufenden Kabelkanäle (6), Stromschienen (7) und Fluidleitungen (32) für Hydraulik, Schmierung und Pneumatik an Stützen (21, 22) seitlich und/oder oberhalb des Vorrichtungsgrundkörpers (2) befestigt sind.

5. Transferstraße nach einem der vorhergehenden Ansprüche, **dadurch gekennzeichnet**, daß die Kabelkanäle (6) und/oder die Stromschienen (7) über seitlich oder zwischen den Platten (11) verlaufende Stichkanäle (14, 15) mit mindestens einem der außen im Bereich der Enden der Seitenständer (5) angeordneten Schaltschränke (16, 17) verbunden sind.

6. Transferstraße nach einem der vorhergehenden Ansprüche, **dadurch gekennzeichnet**, daß jede Platte (11) in Transportrichtung der Werkstücke mindestens zwei Stationen, vorzugsweise eine Arbeits- und eine Leerstation, überdeckt.

7. Transferstraße nach einem der vorhergehenden Ansprüche, **dadurch gekennzeichnet,** daß in oder an der Platte (11) ein Abzugsstutzen (20) und/oder eine Druckentlastungsklappe zur Ableitung von bei der Bearbeitung entstehenden Emissionsgasen angeordnet ist.

8. Transferstraße nach einem der vorhergehenden Ansprüche, **dadurch gekennzeichnet**, daß in der Platte (11) eine verschließbare Öffnung (29) zur Entnahme von Werkstücken aus dem Mittentunnel nach oben angeordnet ist.

9. Transferstraße nach einem der vorhergehenden Ansprüche, **dadurch gekennzeichnet,** daß Hoch- und/oder Niederdruckleitungen (12, 13) für das Kühlmittel in den Mittenständer (1) integriert und/oder seitlich am Mittenständer (1) angebracht sind.

10. Transferstraße nach Anspruch 9, **dadurch gekennzeichnet,** daß die Hoch- und/oder Niederdruckleitungen (12, 13) für das Kühlmittel über im Seitenständer (5) integrierte und/oder über ein oder beidseitig am Seitenständer (5) angebrachte Leitungen (28) mit den Bearbeitungseinheiten (4) verbunden sind.

11. Transferstraße nach einem der vorhergehenden Ansprüche, **dadurch gekennzeichnet,** daß die Ventile für die Kühlmittelzufuhr zu den Bearbeitungseinheiten (4) über den Wasserrinnen an den äußeren Enden der Seiteneinheiten angebracht sind.

12. Transferstraße nach einem der vorhergehenden Ansprüche **dadurch gekennzeichnet,** daß
a) die in Transportrichtung der Werkstücke verlaufenden Versorgungseinrichtungen ausschließlich innerhalb oder im Bereich und/oder oberhalb des Mittenständers (1) angeordnet sind,
b) die Versorgungseinrichtungen mit jeder Bearbeitungseinheiten über kurze, lösbare Verbindungsstücke verbunden sind,
c) zumindest in den Fluidleitungen(32) für Hydraulik, Schmierung, Pneumatik etc. Absperreinrichtungen (31) angeordnet sind und
d) zwischen den Absperreinrichtungen (31) und der Bearbeitungseinheit mindestens ein Steuerblock (10) mit Ventilen (9) angeordnet ist.

## Claims

1. A transfer line for machine tools for mechanical, metal removing processing of work pieces, the transfer line comprising:
- devices for conveying work pieces along the central base (1),
- lateral bases (5) set up along the sides of said central base (1), the processing units (4) being mounted displaceably on said lateral bases, and
- supply devices for supplying said processing units,
characterized in that a plate (11) with a control block (10) is mounted in immediate vicinity to the transport track of said work pieces, said control block being connected on the one hand through valve tubes (23) with a distribution block (8) and/or directly with the fluid mains (32) for hydraulics, lubrication and pneumatics and on the other hand with the consumers of the processing unit, and that said control block (10) being arranged at the underside of said plate (11), said plate being wholly or partly shaped as a cover defining a part of a central tunnel surrounding said transport track of work pieces, and that one or more clamping cylinder(s) (19) are affixed to said plate for clamping of work pieces.

2. A transfer line according to Claim 1, characterized in that a distribution block (8) including lockable connections can be installed into said fluid mains (32) for each of said processing units as a construction unit.

3. A transfer line according to Claim 1 or 2, characterized in that said plate (11) rests on supports (21) of said device base body (2) and that said plate is of a one-partite or multiple-partite configuration and being removable as an overall unit or in component parts, preferably independently of the supply units (6,7,8,14,15).

4. A transfer line according to Claim 1, 2 or 3, characterized in that the cable ducts (6), conductor rails (7) and fluid mains (32) for hydraulics, lubrication and pneumatics running in the direction of the work piece transport are affixed laterally at said supports (21, 22) and/or above said device base body (2).

5. A transfer line according to one of the preceding claims, characterized in that said cable ducts (6) and/or conductor rails (7) are connected through branch channels (14, 15) with at least one of the switch cabinets (16, 17) arranged outside in an area of the ends of said lateral base (5), said branch channels running laterally or between said plates (11).

6. A transfer line according to one of the preceding claims, characterized in that each plate (11) in the direction of work piece transport covers at least two stations, preferably one working station and one empty station.

7. A transfer line according to one of the preceding claims, characterized in that a suction nozzle (20) and/or a pressure relief flap for discharge of emission gases evolving on processing is arranged in or at said plate (11).

8. A transfer line according to one of the preceding claims, characterized in that a lockable opening (29) for take-out of work pieces from the central tunnel towards the top is arranged in said plate (11).

9. A transfer line according to one of the preceding claims, characterized in that high and/or low pressure mains (12, 13) for the coolant are integrated into said central base (1) and/or mounted laterally at said central base (1).

10. A transfer line according to Claim 9, characterized in that said high and/or low pressure mains (12, 139 for the coolant are connected with said processing units (4) through lines (28) integrated said lateral base (5) and/or mounted unilaterally or bilaterally at said lateral base (5).

11. A transfer line according to one of the preceding claims, characterized in that the valves for the feed of coolants to the processing units (4) are mounted above water ducts at the extreme ends of said lateral bases.

12. A transfer line according to one of the preceding claims, characterized in that
a) said supply devices running the direction of work piece transport are solely arranged inside or in an area and/or above of said central base (1);
b) said supply lines are connected with each processing unit via short, detachable connection pieces;
c) shut-off devices (31) are at least arranged in the fluid mains (32) for hydraulics, lubrication and pneumatics, etc.
d) at least one control block (10) with valves (9) is arranged between said shut-off devices (31) and the processing unit.

## Revendications

1. Voie de transfert dotée de machines-outils pour l'usinage mécanique par enlèvement de copeaux de pièces à usiner sur des unités d'usinage avec
- des dispositifs pour le transport des pièces le long des bases centrales (1),
- des bases latérales (5) situées latéralement aux bases centrales (1), sur lesquelles sont montées les unités d'usinage (4) de manière telle qu'elles peuvent être déplacées et
- des dispositifs de distribution pour les unités d'usinage,
**caractérisée en ce qu**'une plaque (11) avec un bloc de commande (10) est installée à proximité immédiate de la voie de transport des pièces à usiner, ledit bloc de commande (10) étant relié d'une part à un bloc de distribution (8) via des flexibles de soupape (23) et/ou directement aux tuyauteries de fluides pour le système hydraulique, le système de graissage, le système pneumatique et, d'autre part, aux consommateurs de l'unité d'usinage, et que le bloc de commande (10) est installé sur la face inférieure de la plaque (11) qui se présente entièrement ou partiellement sous forme de couvercle du tunnel central entourant la voie de transport des pièces à usiner et sur laquelle sont fixés en même temps un ou plusieurs vérin(s) de serrage (19) pour serrer les pièces à usiner.

2. Voie de transfert selon la revendication 1, **caractérisée en ce qu'**un bloc de distribution (8) avec des branchements pouvant être fermés, peut être installé dans les tuyauteries de fluides (32) pour chaque station d'usinage en tant qu'unité de construction.

3. Voie de transfert selon la revendication 1 ou 2, **caractérisée en ce que** la plaque (11) s'appuie sur des supports (21) du corps de base du dispositif (2), qu'elle est composée d'une ou de plusieurs parties et qu'elle est démontable en tant que qu'unité globale ou en pièces détachées, de préférence indépendamment des unités d'alimentation (6, 7, 8, 14,15).

4. Voie de transfert selon la revendication 1, 2 ou 3, **caractérisée en ce que** les conduites de câble (6), barres conductrices de courant (7) et tuyauteries de fluides (32) pour le système hydraulique, le système de graissage et le système pneumatique se déployant dans le sens de transport des pièces à usiner sont fixées à des supports (21, 22) latéralement au corps de base du dispositif (2) et/ou au-dessus de celui-ci.

5. Voie de transfert selon au moins une des revendications précédentes, **caractérisée en ce que** les conduites de câble (6) et/ou les barres conductrices de courant (7) sont reliées à au moins un des coffrets électriques (16,17) installés à l'extérieur au niveau des extrémités des bases latérales (5) via des canaux de dérivation (14, 15) se déployant latéralement aux plaques (11) ou entre lesdites plaques.

6. Voie de transfert selon au moins une des revendications précédentes, **caractérisée en ce que** chaque plaque (11) recouvre au moins deux stations, de préférence une station de travail et une station vide, dans le sens de transport.

7. Voie de transfert selon au moins une des revendications précédentes, **caractérisée en ce qu'**une tubulure d'aspiration (20) et/ou un clapet de décompression pour l'évacuation des gaz d'émission sont installés dans ou sur la plaque (11).

8. Voie de transfert selon au moins une des revendications précédentes, **caractérisée en ce qu'**une ouverture verrouillable (29) pour la prise vers le haut des pièces à usiner dans le tunnel est située dans la plaque (11).

9. Voie de transfert selon au moins une des revendications précédentes, **caractérisée en ce que** des conduites haute et/ou basse pression (12, 13) pour le fluide de réfrigération sont intégrées dans la base centrale (1) et/ou latéralement à la base centrale (1).

10. Voie de transfert selon la revendication 9, **caractérisée en ce que** des conduites haute et/ou basse pression (12, 13) pour le fluide de réfrigération sont reliées aux unités d'usinage (4) via des conduites (28) intégrées dans la base latérale (5) et/ou installées sur un côté ou sur les deux côtés de la base latérale (5).

11. Voie de transfert selon au moins une des revendications précédentes, **caractérisée en ce que** les soupapes pour l'alimentation en fluide de refroidissement des unités d'usinage (4) sont situées au-dessus des rigoles d'eau aux extrémités extérieures des unités latérales.

12. Voie de transfert selon au moins une des revendications précédentes, **caractérisée en ce que**
a) les unités d'alimentation se déployant dans le sens de transport des pièces à usiner sont situées exclusivement à l'intérieur ou dans la zone de la base centrale et/ou au-dessus de celle-ci (1),
b) les unités d'alimentation sont reliées à chaque unité d'usinage via des pièces de liaison courtes et détachables,
c) des dispositifs d'obturation (31) sont mis en place au moyen dans les tuyauteries de fluide (32) pour le système hydraulique, le système de graissage, le système pneumatique etc., et
d) au moins un bloc de commande (10) avec soupapes (9) est installé entre les dispositifs d'arrêt (31) et l'unité d'usinage.
